(19) Europäisches Patentamt
European Patent Office
Office européen des brevets

(11) EP 3 372 632 B1

# (12) EUROPEAN PATENT SPECIFICATION

(45) Date of publication and mention of the grant of the patent:
**21.08.2019 Bulletin 2019/34**

(51) Int Cl.:
***C08J 9/00*** *(2006.01)*

(21) Application number: **17159867.5**

(22) Date of filing: **08.03.2017**

## (54) FOAM MATERIALS MADE OF A COMBINATION OF POLY(BIPHENYL ETHER SULFONE) (PPSU) AND POLYETHERSULFONE (PES)

AUS EINER KOMBINATION AUS POLY(BIPHENYL-ETHERSULFON) (PPSU) UND POLYETHERSULFON (PES) HERGESTELLTES SCHAUMSTOFFMATERIAL

MATÉRIAUX EN MOUSSE CONSTITUÉS D’UNE COMBINAISON DE POLY (BIPHÉNYL ÉTHER SULFONE) (PPSU) ET DE POLYÉTHERSULFONE (PES)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.09.2018 Bulletin 2018/37**

(73) Proprietor: **Solvay Specialty Polymers USA, LLC.**
**Alpharetta, GA 30005-3914 (US)**

(72) Inventors:
- **KENKARE, Nirupama**
  **ALPHARETTA, GA Georgia 30022 (US)**
- **KWAN, Kermit S.**
  **CUMMING, GA Georgia 30041 (US)**
- **LOONEY, William W.**
  **SUGAR HILL, GA Georgia 30518 (US)**
- **EL-HIBRI, Mohammad Jamal**
  **ATLANTA, GA Georgia 30350 (US)**
- **GOPALAKRISHNAN, Vijay**
  **DUNWOODY, GA Georgia 30338 (US)**
- **RICH, Jason**
  **Roswell, GA Georgia 30076 (US)**

(74) Representative: **Fiorucci, Hélène**
**Solvay S.A.**
**Rue de Ransbeek, 310**
**1120 Bruxelles (BE)**

(56) References cited:
**US-A1- 2008 206 536**
**US-A1- 2014 262 427**
**US-A1- 2015 267 023**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 372 632 B1

## Description

### TECHNICAL FIELD

The present invention relates to a foam material (FP) comprising a polymer composition (C) comprising at least two distinct poly(arylether sulfone) polymers. The present invention also relates to a process for the manufacture of said foam material and to an article (A) including said foam material (FP).

### BACKGROUND

Polymeric foams made of poly(aryl ether sulfone) polymer are known and used in various lightweight applications such as transport and building materials.

The articles made therefrom have to present certain specific technical properties which mainly depend on the market segment concerned, for example thermal resistance, flame resistance, mechanical strength, impact resistance, chemical resistance and recycling properties.

Several prior art documents describe foams, or process for making the same, the foams containing a poly(aryl ether sulfone), with the view of reaching certain levels or combinations of these properties.

US 2004/0167241 (BASF) notably describes foams made of thermoplastics selected from the group consisting of polyetherimides (PEI), polyether sulfones (PES), polysulfones, polyether ketones (PEK), polyether ether ketones (PEEK), polyether ketone ketones (PEKK), polyethersulfonamides, and mixtures of these, with the goal of providing a material with good suitability for sound deadening, resistance to high temperatures and which can be recycled. The working examples were performed with polyether sulfones (PES) as an especially preferred high-temperature-resistant thermoplastic.

WO 2014/086744 (Solvay) describes polyarylene/polyphenylsulfone (PPSU) foam materials presenting a fine and homogenous cell structure, as well as superior mechanical properties such as high stiffness and strength properties.

WO 2014/057042 (Solvay) relates to high temperature sulfone foam materials made from a poly(aryl ether sulfone) ($PAES_{HT}$) polymer presenting a high-temperature resistance and a high melt viscosity which make them well-suited to provide chemical resistance, especially to hot liquids.

WO 2013/053851 (Solvay) describe PEI/poly(biphenyl ether sulfone) foam materials which offer high stiffness and strength properties at a given foam density in comparison to poly(biphenyl ether sulfone) foams and higher impact resistance than PEI foams, making the PEI/poly(biphenyl ether sulfone) foam materials especially useful in aircraft applications.

WO 2013/092689 (Solvay) describes a process for making a thermoformed poly(biphenyl ether sulfone) foam article having notably improved heat resistance and mechanical strength.

US 2004/0212119 A1 (BASF) discloses a process for producing foam webs by foam extrusion of a mixture of a polysulfone or polyether sulfone and a volatile blowing agent, where the blowing agent is water or a mixture of water with an ancillary blowing agent such as notably an inert gas or organic liquid, e.g. an alcohol or a ketone. The working examples were performed with polyether sulfones (PES) as the only polymeric component of the mixture.

In some applications, such as the ones depicted below, there is a need for foam materials presenting high compressive strength, that is to say the ability to resist deformation or maintain shape when a compressive force or load is applied to the foam material. The merit of the applicant has been to surprisingly identify a combination of two distinct poly(arylether sulfone) polymers to prepare foams presenting this advantageous mechanical property. More precisely, a poly(biphenyl ether sulfone) (PPSU) and a polyethersulfone polymer (PES) have been combined to prepare a foam material, despite the facts that, first PES and PPSU are known to yield immiscible blends and second, foamed materials based on immiscible/incompatible blends are generally considered as inherently unstable and difficult to prepare. Currently, all commercially available foamed high performance aromatic polymer products are produced from a single polymer (e.g. PEI foam, PES foam). Foaming of immiscible polymer blends is challenging due to differences in viscosity, thermal properties, solubility, and nucleation behavior between the component polymers.

None of the above-mentioned prior art documents describe foam materials made of the combination of a poly(biphenyl ether sulfone) (PPSU) and a polyethersulfone polymer (PES).

### SUMMARY

The invention is directed to a foam material (FP) comprising a polymer composition (C), which comprises :

(a) a polymer blend comprising :

- from 1 to 99 wt. % of a poly(biphenyl ether sulfone) (PPSU), and

- from 99 to 1 wt. % of a polyethersulfone polymer (PES),

the wt. % being based on the total weight of (a),
(b) from 0 to 10 wt. % of at least one additive (AD), based on the total weight of (C).

The present invention also relates to an article (A) including at least a part comprising the foam material (FP) as defined above.
In another aspect, the present invention provides a process for the manufacture of the foam material as defined above, comprising a foaming process selected from a pressure cell process, autoclave process, extrusion process, direct injection processes and bead foaming.

FIGURES

Figure 1 : Normalized compressive stress at 10 % strain of different foam materials as a function of the PES concentration in the PPSU/PES polymer blend
Figure 2 : Normalized yield energy of different foam materials as a function of the PES concentration in the PPSU/PES polymer blend
Figure 3 : Normalized peak impact energy of different foam materials as a function of the PES concentration in the PPSU/PES polymer blend

DETAILED DESCRIPTION

The present invention relates to a foam material (FP) comprising a polymer composition (C), which comprises :

(a) a polymer blend comprising :

- from 1 to 99 wt. % of a poly(biphenyl ether sulfone) (PPSU), and
- from 1 to 99 wt. % of a polyethersulfone polymer (PES),

the wt. % being based on the total weight of (a),
(b) from 0 to 10 wt. % of at least one additive (AD), based on the total weight of (C).

Unless otherwise specified, in the context of the present invention the amount of a component in a composition is indicated as the ratio between the weight of the component and the total weight of the composition multiplied by 100 (also : "wt. %" or "% in weight").

In the context of the present invention, the term "foam" is used with the meaning commonly known to the person skilled in the art. With reference to IUPAC. Compendium of Chemical Terminology, 2nd ed. (the "Gold Book" Compiled by A. D. McNaught and A. Wilkinson. Blackwell Scientific Publications, Oxford 1997, XML on-line corrected version: http://goldbook.iupac.org (2006-) created by M. Nic, J. Jirat, B. Kosata; updates compiled by A. Jenkins. ISBN 0-9678550-9-8. doi:10.1351/goldbook), the term "foam" indicates a dispersion in which a large proportion of gas by volume, in the form of gas bubbles, is dispersed in a liquid, solid or gel. The diameter of the bubbles is usually larger than 1 $\mu$m, but the thickness of the lamellae between the bubbles is often in the usual colloidal size range.

As a non-limiting example, at least 50 % of the volume of the foam according to the present invention can be occupied by gas, for example at least 60 %, at least 70 %, at least 80 % or at least 90 %, based on the total volume of the composition.

The foam material of the present invention comprises a polymer composition (C) which comprise a combination of a poly(biphenyl ether sulfone) (PPSU) and a polyethersulfone polymer (PES). While these two polymers are known to be immiscible, the applicant has been able to prepare foams or foam materials (FP) presenting an improved compressive strength, as measured according to the ISO 844 method, in particular an improved normalized compressive strength (using a reference density $\rho_r$). More precisely, the applicant hereby shows that the foams made of the PPSU/PES combination present an improved normalized compressive strength at 10 % strain $S_r$ and an improved normalized compression yield energy $E_r$, in comparison to foams made of 100 wt. % PPSU or 100 wt. % PES. The applicant also shows below that the foams made of the PPSU/PES combination present an improved normalized peak impact energy $I_r$, in comparison to foams made of 100 wt. % PPSU or 100 wt. % PES.

In the context of the invention, the term "immiscible" or "immiscible polymer blend" is used according to its common meaning known to the person skilled in the art and indicates a composition containing at least two substances

that, when in the liquid state, cannot be mixed or blended together to form a single phase and form at least two separate phases.

The poly(biphenyl ether sulfone) (PPSU)

A poly(biphenyl ether sulfone) polymer is a polyarylene ether sulfone which comprises a biphenyl moiety. Poly(biphenyl ether sulfone) is also known as polyphenyl sulfone (PPSU) and for example results from the condensation of 4,4-dihydroxybiphenyl (biphenol) and 4,4'-dichlorodiphenyl sulfone.

For the purpose of the present invention, a poly(biphenyl ether sulfone) (PPSU) denotes any polymer of which more than 50 mol. % of the recurring units are recurring units ($R_{PPSU}$) of formula (L) :

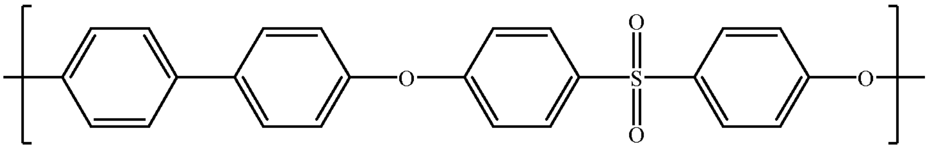

(L)

(the mol. % being based on the total number of moles in the polymer).

The PPSU polymer of the present invention can therefore be a homopolymer or a copolymer. If it is a copolymer, it can be a random, alternate or block copolymer.

According to an embodiment of the present invention, at least 60 mol. %, at least 70 mol. %, at least 80 mol. %, at least 90 mol. %, at least 95 mol. %, at least 99 mol. % or all of the recurring units in the PPSU are recurring units ($R_{PPSU}$) of formula (L).

When the poly(biphenyl ether sulfone) (PPSU) is a copolymer, it can be made of recurring units ($R^*_{PPSU}$), different from recurring units ($R_{PPSU}$), such as recurring units of formula (M), (N) and/or (O) :

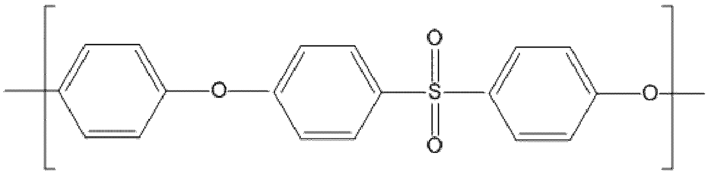

(M)

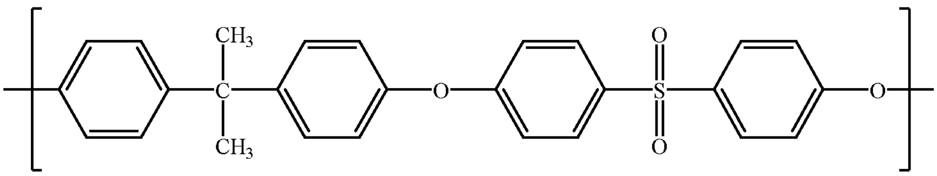

(N)

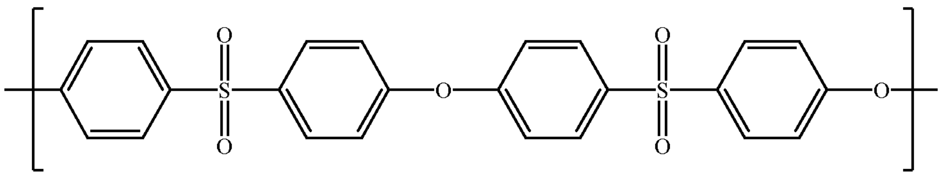

(O).

The poly(biphenyl ether sulfone) (PPSU) can also be a blend of a PPSU homopolymer and at least one PPSU copolymer as described above.

The poly(biphenyl ether sulfone) (PPSU) can be prepared by any method known in the art. It can for example result from the condensation of 4,4-dihydroxybiphenyl (biphenol) and 4,4'-dichlorodiphenyl sulfone. The reaction of monomer units takes place through nucleophilic aromatic polycondensation with the elimination of one unit of hydrogen halide as leaving group. It is to be noted however that the structure of the resulting poly(biphenyl ether sulfone) does not depend on the nature of the leaving group.

PPSU is commercially available as RADEL® R PPSU from Solvay Specialty Polymers USA, L.L.C.

According to the present invention, the polymer blend (a) comprises from 1 to 99 wt. % of poly(biphenyl ether

sulfone) (PPSU).

According to one embodiment, the polymer blend (a), in the foam material (FP) according to the invention, comprises from 20 to 90 wt. %, from 30 to 80 wt. %, from 35 to 70 wt. %, from 40 to 65 wt. %, or from 50 to 60 wt. % of poly(biphenyl ether sulfone) (PPSU), based on the total weight of the polymer blend.

According to the present invention, the weight average molecular weight $M_w$ of the PPSU may be from 10,000 to 80,000 g/mol, for example from 25,000 to 75,000 g/mol or from 30,000 to 70,000 g/mol. The weight average molecular weight can be determined by gel permeation chromatography (GPC) using ASTM D5296 with polystyrene standards.

The polyethersulfone (PES)

For the purpose of the present invention, a polyethersulfone (PES) denotes any polymer of which more than 50 mol. % of the recurring units are recurring units ($R_{PES}$) of formula (O) :

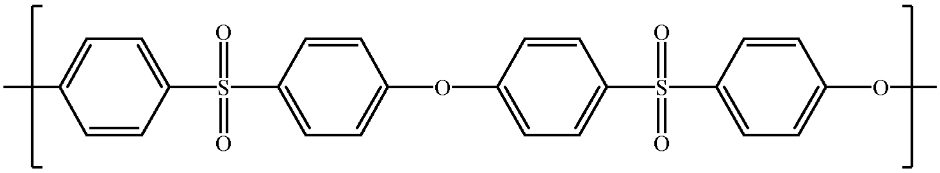

(O)

(the mol. % being based on the total number of moles in the polymer).

The PES polymer of the present invention can therefore be a homopolymer or a copolymer. If it is a copolymer, it can be a random, alternate or block copolymer.

According to an embodiment of the present invention, at least 60 mol. %, at least 70 mol. %, at least 80 mol. %, at least 90 mol. %, at least 95 mol. %, at least 99 mol. % or all of the recurring units in the PES are recurring units ($R_{PES}$) of formula (O).

When the polyethersulfone (PES) is a copolymer, it can be made of recurring units ($R^*_{PES}$), different from recurring units ($R_{PES}$), such as recurring units of formula (M), (N) and/or (L) :

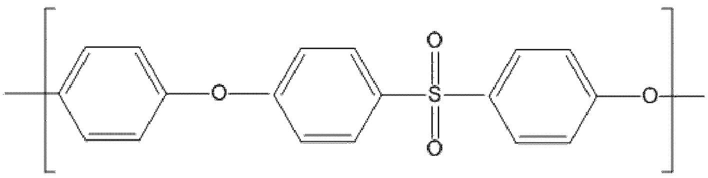

(M)

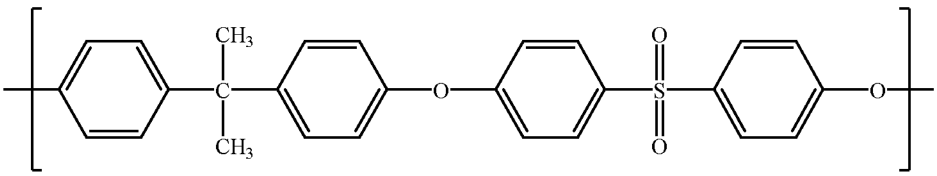

(N)

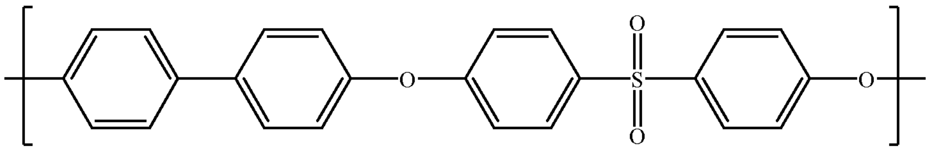

(L).

The polyethersulfone (PES) can also be a blend of a PES homopolymer and at least one PES copolymer as described above.

Polyethersulfone (PES) is commercially available as VERADEL® from Solvay Specialty Polymers USA, L.L.C.

Polyethersulfones (PES) can be prepared by known methods.

According to the present invention, the polymer blend (a) comprises from 1 to 99 wt. % of polyethersulfone (PES).

According to one embodiment, the polymer blend (a), in the foam material (FP) according to the invention,

comprises from 10 to 80 wt. %, from 20 to 70 wt. %, from 30 to 75 wt. %, from 35 to 60 wt. %, or from 50 to 60 wt. % of polyethersulfone (PES), based on the total weight of the polymer blend.

According to the present invention, the weight average molecular weight Mw of the PES may be from 10,000 to 80,000 g/mol, for example from 25,000 to 75,000 g/mol or from 30,000 to 70,000 g/mol. The weight average molecular weight can be determined by gel permeation chromatography (GPC) using ASTM D5296 with polystyrene standards.

Polymer blend (a)

The polymer composition (C), used as an essential part of the foam material of the present invention, comprises :

(a) a polymer blend comprising :

- from 1 to 99 wt. % of a poly(biphenyl ether sulfone) (PPSU), and
- from 1 to 99 wt. % of a polyethersulfone polymer (PES),

the wt. % being based on the total weight of (a),
(b) from 0 to 10 wt. % of at least one additive (AD), based on the total weight of (C).

According to an embodiment of the present invention, the polymer composition (C), used as an essential part of the foam material of the present invention, comprises :

(a) a polymer blend comprising or consisting essentially in :

- from 20 to 90 wt. %, from 30 to 80 wt. %, from 35 to 70 wt. %, from 40 to 65 wt. %, or from 50 to 60 wt. % of poly(biphenyl ether sulfone) (PPSU), and
- from 10 to 80 wt. %, from 20 to 70 wt. %, from 30 to 75 wt. %, from 35 to 60 wt. %, or from 50 to 60 wt. % of polyethersulfone (PES),

the wt. % being based on the total weight of (a),
(b) from 0 to 10 wt. % of at least one additive (AD), based on the total weight of (C).

According to an embodiment, the composition (C) in the foam material (FP) comprises no other polymeric component than the ones of the polymer blend (a).

According to another embodiment, the polymer blend (a) of the polymer composition (C) in the foam material (FP) consists essentially in PPSU and PES. In other words, the polymer blend (a) contains no other polymeric component than PPSU and PES, or contains other polymeric component(s) in a content of less than 1 wt. %, less than 0.5 wt. % or less than 0.2 wt. %.

Additive (AD)

The polymer composition (C) may further comprise up to 10 wt. % of at least one additive (AD), based on the total weight of the polymer composition. The additive can be selected from the group consisting of nucleating agents, chemical foaming agents or residues of the same ; UV absorbers ; stabilizers such as light stabilizers and others ; lubricants ; plasticizers ; pigments ; dyes ; colorants ; anti-static agents ; metal deactivators ; and mixtures thereof.

Examples of antioxidants are phosphites, phosphorates, hindered phenols or mixtures thereof. Surfactants may also be added to help nucleate bubbles and stabilize them during the bubble growth phase of the foaming process.

In some embodiments, the polymer composition (C) comprises one or more nucleating agents. Nucleating agents help to control the foam structure by providing a site for bubble formation.

Examples of nucleating agents are glass fibers, carbon fibers, graphite fibers, silicon carbide fibers, aramide fibers, wollastonite, talc, mica, clays, calcium carbonate, titanium dioxide, potassium titanate, silica, silicate, kaolin, chalk, alumina, aluminate, boron nitride and aluminum oxide.

In some embodiments, the polymer composition (C) comprises one or more inorganic pigments. Inorganic pigments are added to obtain a selected appearance of the polymer composition by changing the color of reflected or transmitted light as the result of wavelength-selective absorption. Examples of inorganic pigments are titanium dioxide, zinc sulfide, zinc oxide, magnesium oxide, barium sulfate, carbon black, cobalt phosphate, cobalt titanate, cadmium sulfoselenide, cadmium selenide, copper phthalocyanine, ultramarine, ultramarine violet, zinc ferrite, magnesium ferrite, and iron oxides.

According to an embodiment, in the foam material (FP) according to the invention, the polymer composition

(C) comprises from 0.1 to 9 wt. %, from 0.2 to 5 wt. %, or from 0.5 to 2 wt. % of at least one additive (AD), based on the total weight of (C).

In some embodiments, the polymer composition (C) can include more than one additive (AD).

According to another embodiment, in the foam material (FP) according to the invention, the polymer composition (C) comprises from 0.1 to 9 wt. %, from 0.2 to 5 wt. %, or from 0.5 to 3 wt. % of at least one nucleating agent, based on the total weight of (C).

Process for preparing the polymer composition (C)

The polymer composition (C) can be prepared by a variety of methods involving intimate admixing of the polymer materials (PPSU and/or PES) with any optional additive (AD) and/or additional components useful in the foam preparation process, for example by melt mixing or a combination of dry blending and melt mixing. This process can be carried out in a solids or fine powder mixer. The mixer types usable for this purpose include tumble type mixers, ribbon type mixers, impeller type mixers, also known as high intensity mixers, shaker type mixers, as well as other types of solids and powders mixers known in the art.

The so-obtained mixture can comprise the components (a), optional additives (AD), and all other optional components, suitable to be directly used in the foaming process or it can be a concentrated mixture to be used as masterbatch and diluted in further amounts of the components in subsequent processing steps.

It is also possible to manufacture the composition of the invention by further melt compounding the mixture as above described. As said, melt compounding can be effected on the mixture as above detailed, or preferably directly on one or both of the polymer components (a) and optional additives (AD), and/or other optional components. Conventional melt compounding devices, such as co-rotating and counter-rotating extruders, single screw extruders, co-kneaders, disc-pack processors and various other types of extrusion equipment can be used. Preferably, extruders, more preferably twin screw extruders, are used.

Specially designed extruders, i.e. extruders specifically designed to effectively control temperature such that further processes such as foaming is not prematurely initiated and such that the composition may be melted, blended, extruded and pelletized without premature foaming of the composition, are particularly preferred. The design of the compounding screw, e.g. flight pitch and width, clearance, length as well as operating conditions will be advantageously chosen so that sufficient heat and mechanical energy is provided to advantageously fully mix the ingredients as above detailed and advantageously obtain a homogeneous distribution of the different ingredients, but still mild enough to advantageously keep the processing temperature of the composition below that in which foaming may be prematurely initiated, in case optional chemical foaming ingredients are comprised in the composition. Provided that the processing temperature is kept well above the softening point of the polymer components (a) and below the decomposition temperature of any components possibly present, it is advantageously possible to obtain strand extrudates of the polymer composition (C) of the invention which have not undergone significant foaming. Such strand extrudates can be chopped by means e.g. of a rotating cutting knife aligned downwards the die plate, generally with an underwater device, which assures perfect cutting knife to die plate alignment, and collected under the form of pellets or beads. Thus, for example the polymer composition (C) which may be present in the form of pellets or beads, can then be further used for the manufacture of the foam material.

Foam material (FP)

The PPSU/PES polymer composition (C) according to the invention is foamed to make low density, fine-cell, closed-cell foam, with enhanced properties in comparison to neat PPSU foams or neat PES foams, processed under similar process conditions, despite for example differences in blowing agent solubility in the two polymers, and immiscibility of the two polymers.

According to an embodiment of the present invention, the foam material (FP) has a density of from 20 to 1000 $kg/m^3$, from 30 to 800 $kg/m^3$, from 35 to 500 $kg/m^3$, from 40 to 300 $kg/m^3$, or from 45 to 200 $kg/m^3$. The density can be measured according to ASTM D1622.

According to an embodiment of the present invention, the foam material (FP) presents an average cell size below 1000 $\mu$m, below 500 $\mu$m, below 300 $\mu$m or below 250 $\mu$m.

The cell size can be measured using optical or scanning electron microscopy.

Foaming of the polymer composition (C) to obtain the foam material (FP) of the present invention can be performed using any foaming technique. Suitable foaming techniques that may be used in the present invention include, but are not limited to, pressure cell processes, autoclave processes, extrusion processes, direct injection processes and bead foaming.

A pressure cell process, for example, is carried out batchwise. Typically, the polymer composition (C) is charged in a pressure cell with a gas under a pressure that is higher than atmospheric pressure and at a temperature that is

below the glass transition temperature of the polymer/gas mixture. The system is immersed in a heating bath to raise the temperature above the glass transition temperature and then the gas is decompressed of the mixture to produce the foam (FP) material. Transfer from the pressure cell to the heating bath is generally carried out as fast as possible, considering that the dissolved gas can quickly diffuse out of the polymer at ambient pressure. After foaming, the foam (FP) material is generally quenched in an ethanol/water mixture at about 20°C.

In an autoclave process, for example, the polymer composition (C) is charged with a gas in an autoclave at a temperature that is above the glass transition temperature of the polymer (P1)/gas mixture and foaming is induced by spontaneous release of the pressure. In contrast to the pressure cell process, in which the gas-charged composition (C) is normally transferred to a heating bath to raise the temperature to above the glass transition temperature but below the critical temperature of the polymer/gas mixture, the autoclave process does not need a heating stage as the polymer is already at the required temperature that is above the glass transition temperature on charging with the gas.

An extrusion process, in contrast to the two techniques described above, is a continuous process. In general, in the extrusion process, the foam (FP) material is formed by melting the polymer composition (C) in the form of pellets or beads and mixing the so obtained molten mixture with at least one blowing agent under pressure. At the exit of the extruder, during depressurization, the blowing agent vaporizes and, by absorbing heat of evaporation, rapidly cools the molten mass thereby forming the foam (FP) material.

Any suitable extrusion equipment capable of processing polymer composition (C) can be used for the extrusion. For example, single or multiple-screw extruders can be used, with a tandem extruder being preferred, with a melting extruder and a cooling extruder.

In a specific embodiment, the polymer composition (C) is molten in a primary extruder. The blowing agent is then fed into the primary extruder and mixed into the molten blend under high pressure and temperature in the last sections of the primary extruder. The molten mass is then fed under pressure to a secondary extruder, which is used to cool the material to be foamed and transport it through a die to a calibrator to form the foam (FP) material. The calibrator helps to control the cooling rate and expansion of the foam (FP) material. Therefore, it is beneficial in helping to control the thickness, width and density of the foam (FP) material. The die is operated at a specific temperature range and pressure range to provide the necessary melt strength and to suppress premature foaming in the die. In one embodiment, a single screw extruder is used for both the primary extruder and the secondary extruder. In an alternative embodiment, a twin-screw extruder is used for both the primary extruder and the secondary extruder. In yet another alternative embodiment, a single screw extruder is used for one of the primary extruder or the secondary extruder and a twin-screw extruder is used for the other.

In the method of the present invention, a blowing agent, or a blend of blowing agents, can be used in different amounts depending on the desired density of the foam (FP) material.

According to an embodiment of the present invention, the amount of blowing agent used varies between 0.5 and 15 wt. %, between 1 and 12 wt. % or between 3 and 10 wt. %, based on the total weight of the polymer composition (C).

The foaming process may be a chemical or a physical foaming process.

When the foaming process is a physical foaming process, use can made of physical foaming ingredients, such as physical blowing agents and optionally nucleating agents.

Physical foaming agents generally refer to those compounds that are in the gaseous state in the foaming conditions (generally high temperature and pressure) because of their physical properties.

The physical foaming agents can be fed to the equipment, wherein foaming takes place, either in their gaseous form, or in any other form, from which a gas will be generated via a physical process (e.g. evaporation, desorption). Otherwise, physical foaming agents may be included in the pre-formed composition (C), to be introduced in the foaming equipment.

In the method of the present invention, any conventional physical blowing agent can be used, such as inert gases, e.g. $CO_2$, nitrogen, argon; hydrocarbons, such as propane, butane, pentane, hexane; aliphatic alcohols, such as methanol, ethanol, propanol, isopropanol, butanol; aliphatic ketones, such as acetone, methyl ethyl ketone; aliphatic esters, such as methyl and ethyl acetate; fluorinated hydrocarbons, such as 1,1,1,2-tetrafluoroethane (HFC 134a) and difluoroethane (HFC 152a), and mixtures thereof.

It is understood that as the physical blowing agent is supplied to a melt, it advantageously generates bubbles, for example as the melt passes through the die and is de-pressurized in an extrusion process.

When the foaming process is a chemical foaming process, use can be made of a chemical foaming agent, in particular a chemical blowing agent.

Chemical foaming agents generally refer to those compositions which decompose or react under the influence of heat in foaming conditions, to generate a foaming gas.

Chemical foaming agents can be comprised in the composition (C) thereby generating in situ the foaming gas or can be added during the process of the present invention. Chemical foaming may also be realized in extrusion devices.

Suitable chemical foaming agents include notably simple salts such as ammonium or sodium bicarbonate, nitrogen evolving foaming agents ; notably aromatic, aliphatic-aromatic and aliphatic azo and diazo compounds, such

as azodicarbonamide and sulphonhydrazides, such as benzene sulphonhydrazide and oxy-bis(benzenesulphonhydrazide); tetrazole compounds, such as notably the ones selected from the group consisting of formulas (T-1), (T-2), (T-3) and (T-4) :

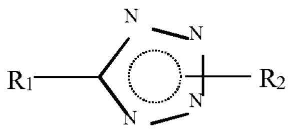

(T-1)

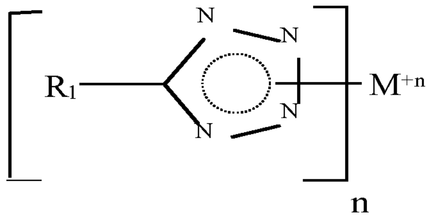

(T-2)

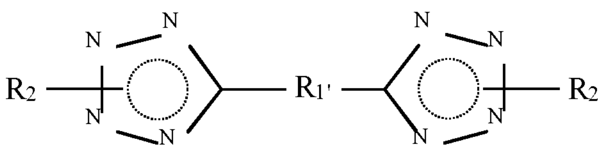

(T-3)

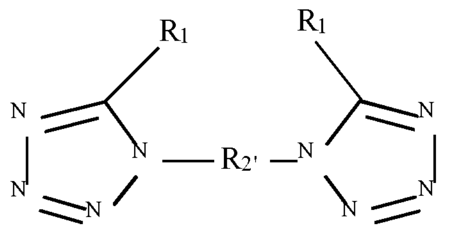

(T-4)

wherein :

- $R_1$ is selected from a group consisting of alkyl, cycloalkyl, arylalkyl and aryl group,
- $R_2$ is selected from a group consisting of hydrogen, alkyl, cycloalkyl, aryl, aralkylene, alkenyl, alkenylaryl and alkenylaralkylene group, optionally substituted,
- $R_{1'}$ and $R_{2'}$, equal to or different from each other and at each occurrence, is independently selected from a group consisting of a bond or a divalent group optionally comprising one or more than one heteroatom,
- n is a number 2 or 3, M is a metal cation selected from the group consisting of barium, calcium, zinc lead or aluminium.

Tetrazole compounds can notably be selected among the compounds listed in WO 2015/097058 A1.
Said chemical foaming agents can optionally be mixed with suitable activators, such as for example amines and amides, urea, sulphonhydrazides (which may also act as secondary foaming agent), and the like.
The foam material (FP) is substantially free of the blowing agents. It is however contemplated that residual amounts of the one or more blowing agents may remain in the foam material, although these residual amounts are not sufficient to adversely affect the foam characteristics of the foam material (FP).
According to an embodiment, the foam material (FP) contains less than 0.1 wt. % or less than 0.05 wt. % of blowing agents or residues thereof, based on the total weight of (C).
In alternative embodiments, any of the residual blowing agent may be further reduced by exposing the foam material (FP) to a drying or heat step.

The foam material (FP) of the present invention may be in the form of a panel, a sheet or a film. It is also understood that the foam material (FP) can be manufactured as a sheet or a panel either supported onto a supporting film or sandwiched between two supporting films.

In one specific embodiment of the method of the present invention, said foam panel comprising the foam material (FP) of the present invention has advantageously a thickness in the range of from 1 mm to 80 mm, from 3 mm to 60 mm or from 4 mm to 50 mm.

Articles

As explained above, foams produced from the polymer compositions of interest herein have improved mechanical properties, in particular with respect to compression strength.

Thus, they are particularly suitable for the preparation of an article (A) including at least a part comprising composition (C) as defined above. According to an embodiment, the article is selected from the group consisting of an airplane cabin interior component, a medical device, a thermal or acoustic insulation article and a portable electronic device.

The articles described herein can be formed using techniques well known in the art, including but not limited to, injection molding, blow molding, compression molding and any combination thereof.

In an aspect, the present invention provides a process for the preparation of an article or part of an article, said process comprising the steps of : preparing the polymer composition (C) as described above by blending the polymeric components (at least PPSU and PES) and optional additive (AD), for example a nucleating agent, and other ingredients, for example a blowing agent, and foaming the polymer composition (C) and then forming the article, or part thereof.

The present invention also relates to the use of a polymer blend comprising :

- from 1 to 99 wt. % of a poly(biphenyl ether sulfone) (PPSU), and
- from 99 to 1 wt. % of a polyethersulfone polymer (PES),

the wt. % being based on the total weight of the polymer blend,
for preparing a foam material (FP).

The present invention also relates to the use of a polymer composition (C), comprising :

(a) a polymer blend comprising :

- from 1 to 99 wt. % of a poly(biphenyl ether sulfone) (PPSU), and
- from 99 to 1 wt. % of a polyethersulfone polymer (PES),

the wt. % being based on the total weight of (a),
(b) from 0 to 10 wt. % of at least one additive (AD), based on the total weight of (C),

for preparing a foam material (FP).

According to an embodiment, the polymer composition (C) is used to prepare a foam material having a density-normalized compressive stress at 10 % strain above 690 kPa, above 700 kPa, above 750 kPa or above 800 kPa, as measured according to the ISO 844 method, when normalized to a reference density $\rho_r$ of 60 kg/m$^3$, according to the following equation :

$$S_r = S(\rho_r/\rho)^{3/2}$$

where :

$S_r$ is the normalized compressive stress of the foam with respect to the reference density $\rho_r$ of 60 kg/m$^3$
$S$ is the measured compressive stress at the measured bulk density $\rho$

According to an embodiment, the polymer composition (C) is used to prepare a foam material having a density-normalized compressive yield energy above 620 kJ/m$^3$, above 630 kJ/m$^3$, above 700 kJ/m$^3$ or above 800 kJ/m$^3$, as measured according to the ISO 844 method, when normalized to a reference density $\rho_r$ of 60 kg/m$^3$, according to the following equation :

$$E_r = E(\rho_r/\rho)^{3/2}$$

where :

$E_r$ is the normalized compressive yield energy of the foam with respect to the reference density $\rho_r$ of 60 kg/m$^3$
$E$ is the measured compressive yield energy at the measured bulk density $\rho$

The following examples are provided to illustrate practical embodiments of the invention, with no intention to limit its scope.

EXAMPLES

Starting materials

*Titanium Dioxide* : Ti-Pure® R-105 titanium dioxide, a rutile $TiO_2$ manufactured by the chloride process, treated with silica and alumina.
RADEL® R-5100 NT PPSU commercially available from Solvay Specialty Polymers USA, L.L.C.
VERADEL® 3200 NT PES commercially available from Solvay Specialty Polymers USA, L.L.C.

**Preparation of the polymer concentrate pellets**

Blends of 30 wt. % of $TiO_2$ and 70 wt. % of neat polymer (either PPSU or PES) were compounded into pellets using a 26 mm twin screw extruder (Coperion® ZSK-26) having an L/D ratio of about 48:1. The neat polymer pellets and the $TiO_2$ powder were fed into the throat of the extruder, and the extruder was set at a temperature of 340 °C (644 °F). The die temperature was set at 340°C (644 °F) and a screw speed of 200 rpm was used along with a total throughput rate of 45 lb/hr (20.4 kg/hr). The extrudate from the extruder was cooled in a water trough and then pelletized.

**General procedure for the preparation of the foam material (FP)**

Neat polymer pellets were dried at 149 °C (300 °F) for 2.5 hours for PPSU, and at 177 °C (350 °F) for 2.5 hours for PES. The foaming setup consisted of a 32 mm diameter Berstorff® twin screw extruder (ZE 30, L/D ratio 38:1) set in series with a 60 mm diameter Berstorff® single screw extruder (KE 60, L/D ratio 30:1). The first extruder (A extruder) output fed via a melt pipe directly into the second (B extruder) in a T-configuration. The B extruder was equipped with a 1 mm (0.04 in.) slit die.
The polymer concentrate pellets produced from the compound formulation, along with the desired amount of neat polymer pellets (PPSU and/or PES), were fed to the A extruder where they were melted. Isopropanol (IPA) was metered into the A extruder at a rate corresponding to 6.5 wt. %, based on the total feed rate of the polymer composition, and at pressures of 950-1200 psi (65-83 bar) depending on the melt pressure in the extruder. The homogenized polymer melt and isopropanol were then fed into the B extruder where the mixture was cooled down to temperatures between 180 °C and 195 °C (between 356 °F and 383 °F). The mixture was then extruded through the slit die and into the calibrator to form a foam panel.
Two comparative compositions (Examples 1c and 5c) and three compositions according to the invention (Examples 2, 3 and 4) have been prepared. Their PES/PPSU weight ratios are reported in Table 1.
The following characterizations have been carried out on the materials of the Examples :

*Bulk density* (*kg*/*m*$^3$) *measurements* :

The mean bulk density was measured according to the D1622 ASTM method. Bulk density results are shown in Table 1.

*Compression measurements :*

Approximately cubic foam samples, about 27-28 mm on each side, were prepared for foam compression measurements, which were performed at room temperature (23 °C, 73 °F) with an Instron® Load Frame (5500 series) according to the ISO 844 method. A Linear Variable Differential Transformer (LVDT) was used to measure strain. Results for the average compressive stress at 10 % strain and for the average compressive yield energy (area under the compression stress-strain curve up to the yield point) are shown in Table 1. Both sets of values are averaged over

measurements made on 5 samples for each weight ratio of PES to PPSU in the polymer blend.

The measured compressive stress data *S* were normalized with respect to a reference density $\rho_r$ of 60 kg/m$^3$ according to the following equation :

$$S_r = S(\rho_r/\rho)^{3/2}$$

where :

$S_r$ is the normalized compressive stress of the foam with respect to the reference density $\rho_r$ of 60 kg/m$^3$
*S* is the measured compressive stress at the measured bulk density $\rho$.

The measured compressive yield energy *E* were normalized with respect to a reference density $\rho_r$ of 60 kg/m$^3$ according to the following equation :

$$E_r = E(\rho_r/\rho)^{3/2}$$

where :

$E_r$ is the normalized compressive yield energy of the foam with respect to the reference density $\rho_r$ of 60 kg/m$^3$
*E* is the measured compressive yield energy at the measured bulk density $\rho$.

The results are shown in Table 1 below.

Table 1 - All formulations contain 2.5 wt. % of $TiO_2$ and present a comparable cell structure

| | **Ratio of PES:PPSU (wt. %)** | **Bulk density (kg/m$^3$)** | **Compressive stress at 10 % strain (kPa)** | **Yield energy (kJ/m$^3$)** | **Normalized compressive stress at 10 % strain (kPa)** | **Normalized yield energy (kJ/m$^3$)** |
|---|---|---|---|---|---|---|
| **Ex. 1c** | 0:100 | 72.0 | 820 | 806 | 624 | 613 |
| **Ex. 2** | 25:75 | 84.8 | 1360 | 1465 | 809 | 872 |
| **Ex. 3** | 50:50 | 88.1 | 1460 | 1311 | 820 | 737 |
| **Ex. 4** | 75:25 | 94.1 | 1350 | 1474 | 687 | 750 |
| **Ex. 5c** | 100:0 | 86.6 | 1190 | 1020 | 686 | 588 |

*Impact measurements :*

Square foam samples, about 100 mm on each side and 10 mm thick, were prepared for impact measurements, which were performed at room temperature (23 °C, 73 °F) with an Instron® Ceast 9350 drop tower according to the ASTM D3763 method. The drop tower was equipped with a strain gauge tup having a 22 kN force range and a hemispherical insert with a diameter of 12.7 mm (0.5 in.). The total dropped mass was 7.1310 kg (including the masses of the tup and the weight holder), and the drop height was set to 20 cm, resulting in an impact velocity of 1.98 m/s and an impact energy of 13.99 J. The sample support had a circular opening with a diameter of 19.990 mm. Results for the peak impact energy are shown in Table 2, with values averaged over measurements made on 5 samples for each weight ratio of PES to PPSU in the polymer blend.

The measured peak impact energy data *I* were normalized with respect to a reference density $\rho_r$ of 60 kg/m$^3$ according to the following equation :

$$I_r = I(\rho_r/\rho)^{3/2}$$

where :

$I_r$ is the normalized peak impact energy of the foam with respect to the reference density $\rho_r$ of 60 kg/m$^3$.
$I$ is the measured peak impact energy at the measured bulk density $\rho$.

Table 2 - All formulations contain 2.5 wt. % of $TiO_2$ and present a comparable cell structure

| | Ratio of PES:PPSU (wt. %) | Bulk density (kg/m$^3$) | Peak impact energy (J) | Normalized peak impact energy (J) |
|---|---|---|---|---|
| **Ex. 1c** | 0:100 | 72.0 | 4.10 | 1.75 |
| **Ex. 2** | 25:75 | 84.8 | 5.20 | 1.80 |
| **Ex. 3** | 50:50 | 88.1 | 5.21 | 1.73 |
| **Ex. 4** | 75:25 | 94.1 | 6.11 | 1.75 |
| **Ex. 5c** | 100:0 | 86.6 | 5.24 | 1.61 |

Figures 1 and 2 respectively show the obtained normalized values of the compressive stress at 10 % strain and the obtained normalized values of the compressive yield energy, as a function of the weight percent of PES in the polymer blend. Figure 3 shows the obtained normalized values of the peak impact energy as a function of the weight percent of PES in the polymer blend. The dashed lines in each figure indicate the weighted-average predictions based on the results for the 100 wt. % PPSU and 100 wt. % PES foams. All three plots show that throughout the range of blend concentrations the blend foams outperform the predictions based on foams made from the neat polymers. In all three figures, the deviation bars indicate the standard error of the mean for each normalized value.

**Claims**

**1.** A foam material (FP) comprising a polymer composition (C), which comprises :

(a) a polymer blend comprising :

- from 1 to 99 wt. % of a poly(biphenyl ether sulfone) (PPSU), and
- from 1 to 99 wt. % of a polyethersulfone polymer (PES),

the wt. % being based on the total weight of (a),
(b) from 0 to 10 wt. % of at least one additive (AD), based on the total weight of (C).

**2.** The foam material (FP) of claim 1, wherein the amount of PPSU in the blend (a) varies between 20 and 90 wt. %, based on the total weight of the polymer blend (a).

**3.** The foam material (FP) of claim 1 or 2, wherein the polymer blend (a) consists essentially of PPSU and PES.

**4.** The foam material (FP) of any one of claims 1-3, wherein the polymer composition (C) comprises from 0.2 to 5 wt. % of at least one additive (AD), based on the total weight of (C).

**5.** The foam material (FP) of any one of claims 1-4, having a density from 20 to 1000 kg/m$^3$, as measured according to ASTM D1622.

**6.** The foam material (FP) of any one of claims 1-5, comprising a polymer composition (C), which comprises :

(a) a polymer blend comprising :

- from 20 to 60 wt. % of a poly(biphenyl ether sulfone) (PPSU), and
- from 40 to 80 wt. % of a polyethersulfone polymer (PES),

the wt. % being based on the total weight of (a),
(b) from 0.1 to 5 wt. % of at least one nucleating agent, based on the total weight of (C).

**7.** An article (A) including at least a part comprising the foam material (FP) according to of any one of claims 1-6.

**8.** The article (A) according to claim 7, wherein the article is selected from the group consisting of an airplane cabin interior component, a medical device, a thermal or acoustic insulation article and a portable electronic device.

**9.** A process for the manufacture of the foam material (FP), said process comprising the steps of:

- preparing a polymer composition (C) which comprises :

(a) a polymer blend comprising :

- from 1 to 99 wt. % of a poly(biphenyl ether sulfone) (PPSU), and
- from 99 to 1 wt. % of a polyethersulfone polymer (PES),

the wt. % being based on the total weight of (a),
(b) from 0 to 10 wt. % of at least one additive (AD), based on the total weight of (C), and

- foaming the polymer composition (C) using a process selected from the group consisting of a pressure cell process, an autoclave process, an extrusion process, direct injection process and bead foaming.

**10.** The process of claim 9, wherein a blowing agent is used in an amount from 0.5 to 15 wt. % based on the total weight of the polymer composition (C).

**11.** The process of claims 9 or 10, wherein the foaming step is an extrusion process in a tandem extruder composed of a melting extruder and a cooling extruder.

**12.** Use of a polymer blend comprising :

- from 1 to 99 wt. % of a poly(biphenyl ether sulfone) (PPSU), and
- from 99 to 1 wt. % of a polyethersulfone polymer (PES),

the wt. % being based on the total weight of (a), for preparing a foam material (FP).

**13.** Use of a polymer composition (C), comprising :

(a) a polymer blend comprising :

- from 1 to 99 wt. % of a poly(biphenyl ether sulfone) (PPSU), and
- from 1 to 99 wt. % of a polyethersulfone polymer (PES),

the wt. % being based on the total weight of (a),
(b) from 0 to 10 wt. % of at least one additive (AD), based on the total weight of (C),

for preparing a foam material (FP).

**Patentansprüche**

**1.** Schaumstoffmaterial (FP), umfassend eine Polymerzusammensetzung (C), die umfasst:

(a) ein Polymergemisch umfassend:

- von 1 bis 99 Gew.-% an einem Poly(biphenylethersulfon) (PPSU) und
- von 1 bis 99 Gew.-% an einem Polyethersulfonpolymer (PES),

wobei die Gew.-%-Werte auf das Gesamtgewicht von (a) bezogen sind,
(b) von 0 bis 10 Gew.-% an wenigstens einem Zusatzstoff (AD), bezogen auf das Gesamtgewicht von (C).

**2.** Schaumstoffmaterial (FP) gemäß Anspruch 1, wobei die Menge an PPSU in dem Gemisch (a) zwischen 20 und 90 Gew.-%, bezogen auf das Gesamtgewicht des Polymergemischs (a), variiert.

**3.** Schaumstoffmaterial (FP) gemäß Anspruch 1 oder 2, wobei das Polymergemisch (a) im Wesentlichen aus PPSU und PES besteht.

**4.** Schaumstoffmaterial (FP) gemäß einem der Ansprüche 1-3, wobei die Polymerzusammensetzung (C) von 0,2 bis 5 Gew.-% an wenigstens einem Zusatzstoff (AD), bezogen auf das Gesamtgewicht von (C), umfasst.

**5.** Schaumstoffmaterial (FP) gemäß einem der Ansprüche 1-4 mit einer Dichte von 20 bis 1000 $kg/m^3$, wie gemessen gemäß ASTM D1622.

**6.** Schaumstoffmaterial (FP) gemäß einem der Ansprüche 1-5, umfassend eine Polymerzusammensetzung (C), die umfasst:

(a) ein Polymergemisch umfassend:

- von 20 bis 60 Gew.-% an einem Poly(biphenylethersulfon) (PPSU) und
- von 40 bis 80 Gew.-% an einem Polyethersulfonpolymer (PES),

wobei die Gew.-%-Werte auf das Gesamtgewicht von (a) bezogen sind,
(b) von 0,1 bis 5 Gew.-% an wenigstens einem Nukleierungsmittel, bezogen auf das Gesamtgewicht von (C).

**7.** Gegenstand (A), der wenigstens einen Teil aufweist, der das Schaumstoffmaterial (FP) gemäß einem der Ansprüche 1-6 umfasst.

**8.** Gegenstand (A) gemäß Anspruch 7, wobei der Gegenstand ausgewählt ist aus der Gruppe bestehend aus einer Flugzeugkabinen-Innenkomponente, einer medizinischen Vorrichtung, einem Wärme- oder Schallisolierungsgegenstand und einer tragbaren elektronischen Vorrichtung.

**9.** Verfahren zur Herstellung des Schaumstoffmaterials (FP), wobei das Verfahren die Schritte umfasst:

- Herstellen einer Polymerzusammensetzung (C), die umfasst:

(a) ein Polymergemisch umfassend:

- von 1 bis 99 Gew.-% an einem Poly(biphenylethersulfon) (PPSU) und
- von 99 bis 1 Gew.-% an einem Polyethersulfonpolymer (PES),

wobei die Gew.-%-Werte auf das Gesamtgewicht von (a) bezogen sind,
(b) von 0 bis 10 Gew.-% an wenigstens einem Zusatzstoff (AD), bezogen auf das Gesamtgewicht von (C), und

- Schäumen der Polymerzusammensetzung (C) unter Verwendung eines Verfahrens ausgewählt aus der Gruppe bestehend aus einem Druckzellenverfahren, einem Autoklavenverfahren, einem Extrusionsverfahren, einem Direktspritzverfahren und Kugelschäumen.

**10.** Verfahren gemäß Anspruch 9, wobei ein Blähmittel in einer Menge von 0,5 bis 15 Gew.-%, bezogen auf das Gesamtgewicht der Polymerzusammensetzung (C), verwendet wird.

**11.** Verfahren gemäß Ansprüchen 9 oder 10, wobei der Schritt des Schäumens ein Extrusionsverfahren in einem Tandemextruder ist, der aus einem Schmelzextruder und einem Kühlextruder besteht.

**12.** Verwendung eines Polymergemischs umfassend:

- von 1 bis 99 Gew.-% an einem Poly(biphenylethersulfon) (PPSU) und
- von 99 bis 1 Gew.-% an einem Polyethersulfonpolymer (PES),

wobei die Gew.-%-Werte auf das Gesamtgewicht von (a) bezogen sind,
zur Herstellung eines Schaumstoffmaterials (FP).

**13.** Verwendung einer Polymerzusammensetzung (C) umfassend:

(a) ein Polymergemisch umfassend:

- von 1 bis 99 Gew.-% an einem Poly(biphenylethersulfon) (PPSU) und
- von 1 bis 99 Gew.-% an einem Polyethersulfonpolymer (PES),

wobei die Gew.-%-Werte auf das Gesamtgewicht von (a) bezogen sind,
(b) von 0 bis 10 Gew.-% an wenigstens einem Zusatzstoff (AD), bezogen auf das Gesamtgewicht von (C),

zur Herstellung eines Schaumstoffmaterials (FP).

**Revendications**

**1.** Matériau expansé (FP, *foam material*) comprenant une composition de polymère (C), qui comprend :

(a) une formule de polymère comprenant :

- entre 1 et 99 % en masse d'une poly(biphényléther sulfone) (PPSU), et
- entre 1 et 99 % en masse d'un polymère de polyéthersulfone (PES), les % en masse étant donnés par rapport à la masse totale de (a),

(b) entre 0 et 10 % en masse d'au moins un additif (AD), par rapport à la masse totale de (C).

**2.** Matériau expansé (FP) selon la revendication 1, où la quantité de PPSU dans le mélange (a) varie entre 20 et 90 % en masse, par rapport à la masse totale de la formule polymère (a).

**3.** Matériau expansé (FP) selon la revendication 1 ou 2, où la formule polymère (a) est essentiellement constituée de PPSU et de PES.

**4.** Matériau expansé (FP) selon l'une quelconque des revendications 1 à 3, où la composition de polymère (C) comprend entre 0,2 et 5 % en masse d'au moins un additif (AD), par rapport à la masse totale de (C).

**5.** Matériau expansé (FP) selon l'une quelconque des revendications 1 à 4, ayant une densité de 20 à 1000 $kg/m^3$, comme mesuré selon ASTM D1622.

**6.** Matériau expansé (FP) selon l'une quelconque des revendications 1 à 5, comprenant une composition de polymère (C), qui comprend :

(a) une formule de polymère comprenant :

- entre 20 et 60 % en masse d'une poly(biphényléther sulfone) (PPSU), et
- entre 40 et 80 % en masse d'un polymère de polyéthersulfone (PES), les % en masse étant donnés par rapport à la masse totale de (a),

(b) entre 0,1 et 5 % en masse d'au moins un agent de nucléation, par rapport à la masse totale de (C).

**7.** Article (A) incluant au moins une partie comprenant le matériau expansé (FP) selon l'une quelconque des revendications 1 à 6.

**8.** Article (A) selon la revendication 7, où l'article est choisi dans le groupe constitué par un composant d'intérieur de cabine d'aéronef, un dispositif médical, un article d'isolation thermique ou acoustique et un dispositif électronique portatif.

**9.** Procédé de fabrication du matériau expansé (FP), ledit procédé comprenant les étapes consistant à :

- préparer une composition de polymère (C) qui comprend :

(a) une formule de polymère comprenant :

- entre 1 et 99 % en masse d'une poly(biphényléther sulfone) (PPSU), et
- entre 99 et 1 % en masse d'un polymère de polyéthersulfone (PES), les % en masse étant donnés par rapport à la masse totale de (a),

(b) entre 0 et 10 % en masse d'au moins un additif (AD), par rapport à la masse totale de (C), et

- expanser la composition de polymère (C) par un procédé choisi dans le groupe constitué par un procédé à cellules de pression, un procédé en autoclave, un procédé d'extrusion, un procédé par injection directe et une expansion de billes.

**10.** Procédé selon la revendication 9, où un agent d'expansion est utilisé à une teneur comprise entre 0,5 et 15 % en masse par rapport à la masse totale de la composition de polymère (C).

**11.** Procédé selon la revendication 9 ou 10, où l'étape d'expansion est un procédé d'extrusion dans une extrudeuse en tandem composée d'une extrudeuse à fusion et d'une extrudeuse à refroidissement.

**12.** Utilisation d'une formule de polymère comprenant :

- entre 1 et 99 % en masse d'une poly(biphényléther sulfone) (PPSU), et
- entre 99 et 1 % en masse d'un polymère de polyéthersulfone (PES), les % en masse étant donnés par rapport à la masse totale de (a),

pour la préparation d'un matériau expansé (FP).

**13.** Utilisation d'une composition de polymère (C), comprenant :

(a) une formule de polymère comprenant :

- entre 1 et 99 % en masse d'une poly(biphényléther sulfone) (PPSU), et
- entre 1 et 99 % en masse d'un polymère de polyéthersulfone (PES), les % en masse étant donnés par rapport à la masse totale de (a),

(b) entre 0 et 10 % en masse d'au moins un additif (AD), par rapport à la masse totale de (C),

pour la préparation d'un matériau expansé (FP).

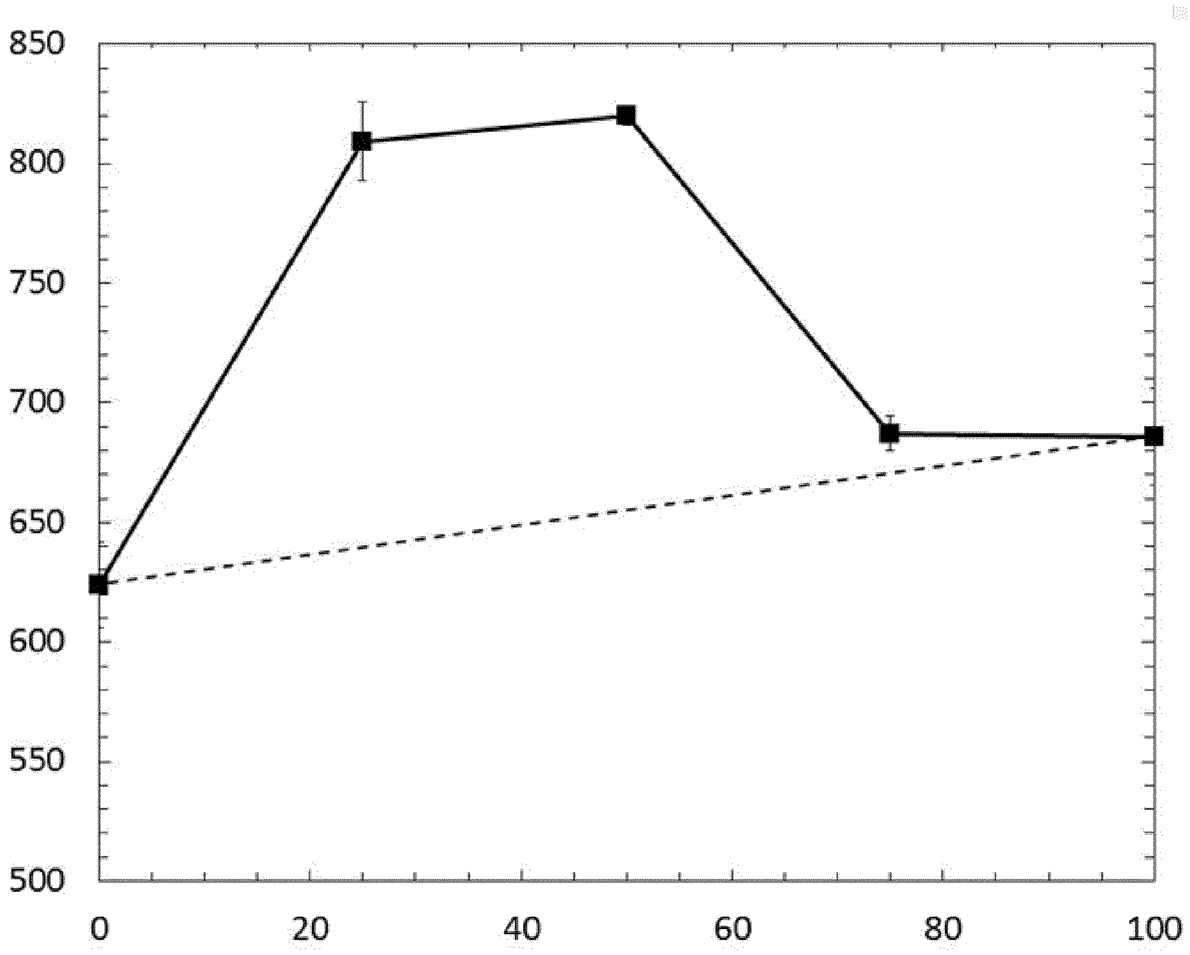


Figure 1

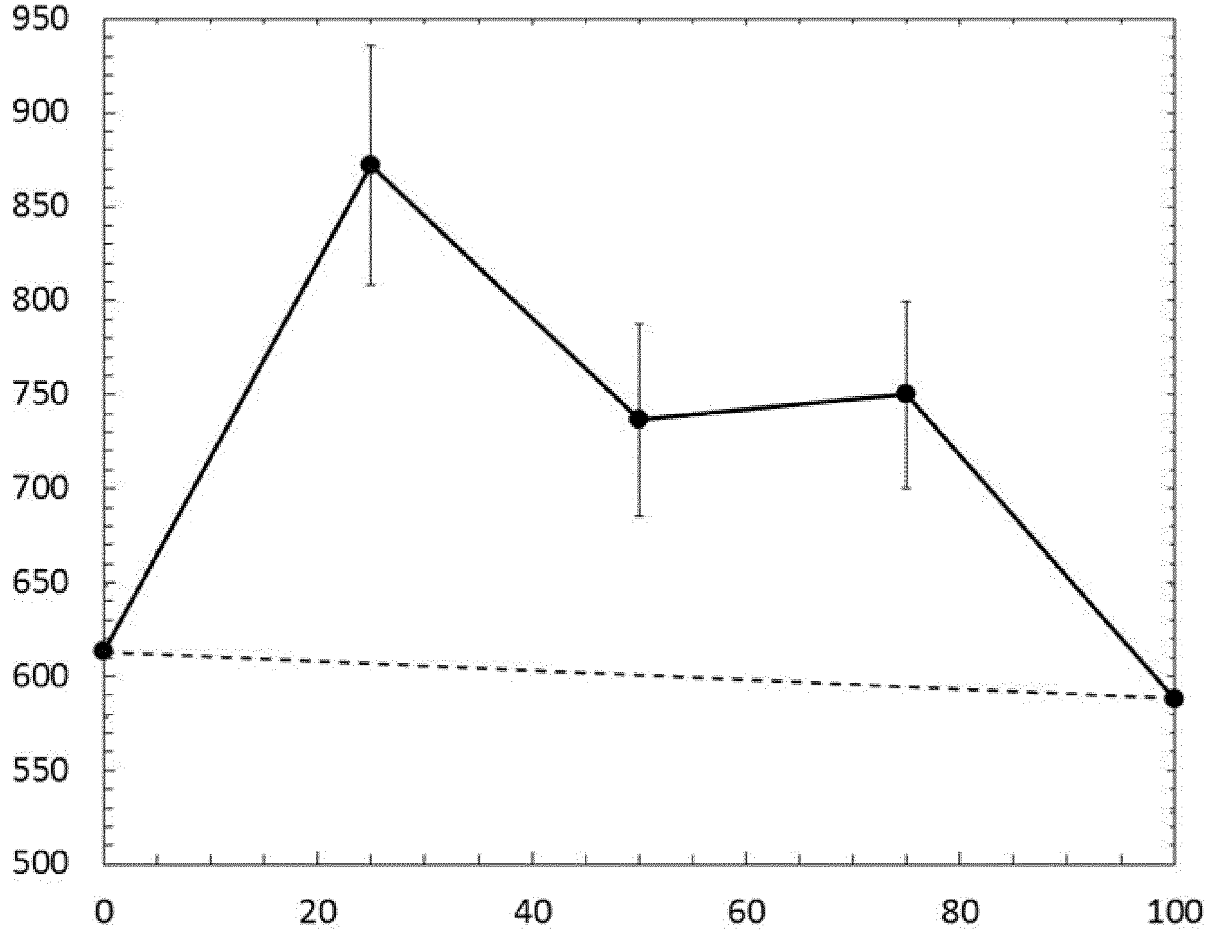


Figure 2

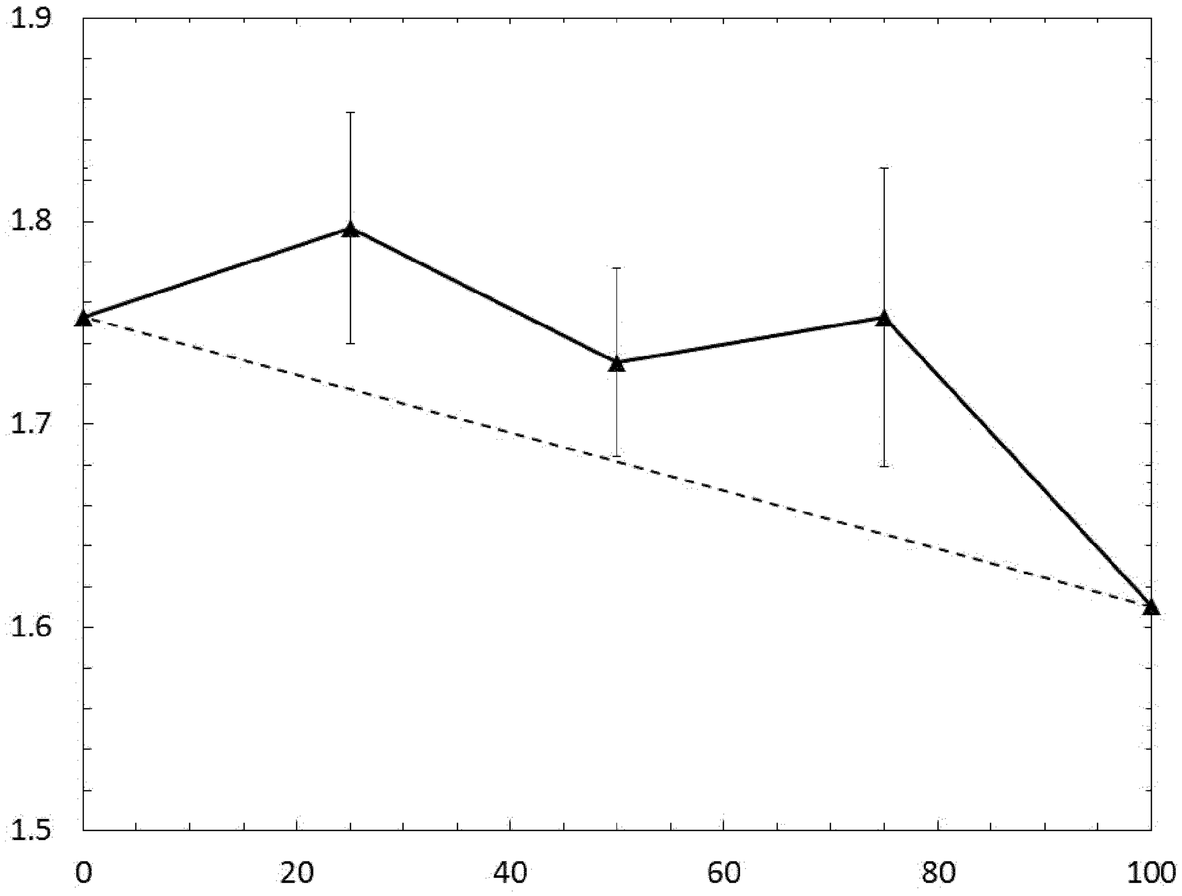


Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20040167241 A
- WO 2014086744 A
- WO 2014057042 A
- WO 2013053851 A
- WO 2013092689 A
- US 20040212119 A1
- WO 2015097058 A1


### Non-patent literature cited in the description


- Compendium of Chemical Terminology. **A. D. MCNAUGHT ; A. WILKINSON.** Gold Book. Blackwell Scientific Publications, 1997